# FASCICULE DE BREVET EUROPEEN

(11) **EP 1 620 367 B1**
(45) Date de publication et mention de la délivrance du brevet: **16.06.2010**
(21) Numéro de dépôt: 04742668.9
(22) Date de dépôt: 07.05.2004
(51) Int. Cl.: C03B 37/04

(54) **DISPOSITIF ET PROCEDE D'OBTENTION D'UN PRODUIT A BASE DE FIBRES MINERALES**
VORRICHTUNG UND VERFAHREN ZUR HERSTELLUNG EINES MINERALFASERPRODUKTES
DEVICE AND PRODUCTION METHOD FOR THE PRODUCTION OF A MINERAL FIBRE-BASED PRODUCT

(30) Priorité: 07.05.2003 FR 0305564
(43) Date de publication de la demande: 01.02.2006
(73) Titulaire: SAINT-GOBAIN ISOVER, 92400 Courbevoie (FR)
(72) Inventeur: MARICOURT, Jean-Pierre, F-84000 AVIGNON (FR); GUYOT, Daniel, F-60290 Rantigny (FR)
(74) Mandataire: Aupetit, Muriel J. C.
(86) Numéro de dépôt international: PCT/FR2004/001109
(87) Numéro de publication internationale: WO 2004/099095

(56) Documents cités:
- EP-A- 0 091 381
- EP-A- 0 133 083
- EP-A- 0 189 354
- EP-A- 0 399 320
- EP-A- 0 412 878
- EP-A- 0 434 536
- EP-B- 0 889 981
- WO-A-00/17117
- WO-A-01/38245
- WO-A-02/06171
- US-A- 3 560 179

## Description

L'invention concerne les produits à base de fibres minérales, telles que de la laine de verre, destinées à entrer par exemple dans la composition de produits d'isolation thermique et/ou acoustique.

Ces produits sont obtenus par un procédé de centrifugation interne associée à un étirage par un courant gazeux à haute température.

De manière connue, ce procédé de formation de fibres consiste à introduire un filet de verre fondu dans un centrifugeur, encore appelé assiette de fibrage, tournant à grande vitesse et percé à sa périphérie par un très grand nombre d'orifices par lesquels le verre est projeté sous forme de filaments sous l'effet de la force centrifuge. Ces filaments sont alors soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par une bande perméable aux gaz.

L'invention s'intéresse plus particulièrement, sans caractère limitatif cependant, aux produits d'isolation thermique et/ou phonique présentant des propriétés mécaniques particulièrement élevées, pour des applications spécifiques nécessitant de telles propriétés. Il s'agit notamment des produits d'isolation se présentant sous forme de feutres qui sont adaptés à supporter des éléments de maçonnerie et qui doivent par conséquent résister à des fortes compressions tels que les éléments servant à l'isolation des toitures-terrasses accessibles à la circulation. C'est aussi le cas des produits utilisés en isolation pour l'extérieur et qui doivent pouvoir, notamment, résister aux efforts à l'arrachement.

Pour atteindre ces performances, ce type de produit d'isolation est généralement de forte densité, par exemple d'au moins 40 kg/m³, et a subi, après l'opération de fibrage à proprement dite, une opération visant à ce que les fibres à l'intérieur du feutre prennent des directions aussi variées que possible sans trop modifier de façon sensible l'orientation générale de la nappe de fibres issue de la centrifugation. Cette opération consiste notamment en un "crêpage" des fibres, obtenu par passage de la nappe de fibres entre deux séries de convoyeurs délimitant ses faces inférieure et supérieure, une compression longitudinale résultant du passage d'une paire de convoyeurs animés d'une certaine vitesse à une paire de convoyeurs de vitesse inférieure à la précédente. Ce type d'opération est par exemple décrit dans le brevet EP-0 133 083, ou encore dans le document EP-B1-0889981.

Cependant, il a été constaté que cette opération de crêpage ne permettait pas toujours d'obtenir l'amélioration dans les propriétés mécaniques escomptée.

Le document de la demande de brevet publiée WO 01/38245 a justement pour but d'améliorer les propriétés mécaniques de produits d'isolation thermique et/ou phonique (ou tout au moins d'assurer une meilleure constance de ces propriétés d'un produit à l'autre), sans en dégrader les propriétés d'isolation, en se concentrant plus particulièrement sur les produits d'isolation de haute densité ayant subi un crêpage.

Au lieu de chercher à modifier les paramètres du procédé de crêpage habituel, ce document a étudié les raisons pour lesquelles ce crêpage n'était pas toujours satisfaisant. Il est arrivé à la conclusion qu'après crêpage, il arrivait que les fibres ne présentaient pas suffisamment l'orientation isotrope qu'on espérait, et que ceci était dû au fait, notamment, que leurs dimensions n'étaient pas forcément les plus adaptées : les fibres, trop longues, étaient difficiles par simple crêpage à réorienter aussi aléatoirement qu'il était nécessaire pour assurer la meilleure résistance à l'arrachement et à la compression.

L'objet de ce document a alors consisté à modifier les conditions de fibrage pour ajuster les dimensions des fibres afin qu'elles se prêtent mieux au crêpage, notamment en les rendant plus courtes.

De manière classique, un dispositif de l'art antérieur de formation de fibres minérales par centrifugation interne comporte:
- un centrifugeur apte à tourner autour d'un axe, notamment vertical, et dont la bande périphérique est percée d'une pluralité d'orifices,
- un moyen d'étirage gazeux à haute température sous forme d'un brûleur annulaire,
- un moyen pneumatique pour canaliser/ajuster les dimensions des fibres sous forme d'une couronne de soufflage.

En fait, schématiquement, la nappe de gaz produite par le moyen pneumatique qu'est la couronne de soufflage ne constitue pas une barrière pneumatique "étanche", en ce sens que tout ou partie des fibres sont animées d'une force centrifuge suffisante pour la traverser. Par contre, cette barrière pneumatique vient les freiner, infléchir éventuellement la direction de leur mouvement ; mais aussi agir sur leurs dimensions : quand les fibres viennent heurter la nappe de gaz froid, le choc qui en résulte est suffisamment fort pour que les fibres puissent éventuellement être brisées.

C'est donc un moyen connu pour contrôler la longueur des fibres. Cependant, il s'est révélé insuffisant pour véritablement obtenir une longueur de fibres suffisamment courte pour autoriser un crêpage dans de meilleures conditions sans pour autant compromettre leurs capacités d'isolation.

Aussi, le document cité WO 01/38245 a modifié la façon dont on canalise les fibres ayant subi l'étirage gazeux à chaud à partir d'un dispositif usuel de l'art antérieur.

Ainsi, il est prévu d'après ce document outre ledit moyen pneumatique, un autre moyen consistant en un moyen mécanique comprenant une paroi refroidie disposée autour du centrifugeur en regard de sa bande périphérique au moins.

Le moyen mécanique additionnel préconisé par ce document s'est montré très efficace pour compléter l'action de la couronne de soufflage et offrir plus de possibilités pour contrôler la dimension des fibres. Il s'agit ici donc d'ajouter à la barrière pneumatique de la couronne de soufflage une autre barrière, cette fois mécanique, disposée autour du centrifugeur au-delà due la barrière pneumatique, qui va elle aussi remplir deux rôles : d'abord, elle va canaliser toutes les fibres, toutes celles ayant déjà pu franchir la première barrière pneumatique, sous l'organe récepteur des fibres, ensuite, elle va permettre d'ajuster plus finement la longueur des fibres recueillies : les heurts des fibres contre la paroi physique permettent très efficacement de les raccourcir pour obtenir un crêpage optimal. En outre, cette paroi est refroidie, de façon à ce que les fibres qui entrent en contact avec elle, qui sont encore relativement chaudes, ne risquent pas de s'y coller.

Cependant, l'addition de ce moyen mécanique constitué par la paroi annulaire disposée à proximité et dans l'axe du centrifugeur empêche la mise en place autour de ce dernier d'un inducteur annulaire parcouru par un courant électrique, bien connu de l'état de la technique, qui permet lorsqu'il est présent, de chauffer par induction le bas de bande de la paroi périphérique du centrifugeur qui a tendance à se refroidir. Ce refroidissement est d'ailleurs accentué par l'addition de la paroi refroidie.

De ce fait, le dispositif du document cité ne possédant pas d'inducteur annulaire et utilisant une paroi annulaire refroidie engendre comme inconvénient de présenter un bas de bande se refroidissant, ce qui a tendance à entraîner dans le temps une difficulté de passage des filaments au travers des orifices inférieurs du centrifugeur, arrivant à produire non plus des filaments mais des particules infibrées et/ou dévitrifiées, et aboutissant même à boucher les orifices. Des essais ont montré que ce phénomène est marginal quand on vise à produire des fibres de « gros diamètre », notamment de l'ordre de 10µm de diamètre comme dans le document cité, mais s'accentue de manière très significative quand on cherche à obtenir des fibres plus fines, notamment de l'ordre de moins de 6 µm de diamètre.

Aussi, le produit final de ce document cité, commercialisé en particulier par la société SAINT-GOBAIN ISOVER sous la dénomination LITOBAC, présente, certes des fibres plus courtes que celles usuellement obtenues, mais avec la présence possible de grains ou particules dévitrifiées, ce qui peut affecter ses qualités mécanique (résistance à la compression et à l'arrachement) et thermique.

En outre, ce produit aux fibres plus courtes présente des fibres relativement grosses, de l'ordre de 10µm de diamètre, et plus précisément avec un micronaire de 6,8 sous 5 grammes. Or cette grosseur de fibres engendre un produit rêche au toucher ce qui rend sa manipulation plutôt incommodante. On rappelle que la finesse des fibres est déterminée par la valeur de leur micronaire (F) sous 5g. La mesure du micronaire appelée aussi 'indice de finesse" rend compte de la surface spécifique grâce à la mesure de la perte de charge aérodynamique lorsqu'une quantité donnée de fibres extraites d'un matelas non ensimé est soumise à une pression donnée d'un gaz - en général de l'air ou de l'azote. Cette mesure est usuelle dans les unités de production de fibres minérales, elle est normalisée (DIN 53941 ou ASTM D 1448) et elle utilise un appareil dit "appareil micronaire".

Par ailleurs, on connaît du document US-A-3560179 un dispositif de fibrage comportant les caractéristiques du préambule de la revendication 1. Cependant, le panier est beaucoup trop haut pour les centrifugeurs de configuration actuelle qui sont de plus grand diamètre et de forme plus ramassée.

L'invention a donc pour but de fournir un dispositif de formation de fibres minérales par centrifugation interne qui adapté aux centrifugeurs actuels permet d'obtenir un produit d'isolation thermique et/ou phonique, qui sans présenter les inconvénients de l'art antérieur améliore ses qualités de résistance à l'arrachement et à la compression.

Selon l'invention, le dispositif de formation de fibres minérales par centrifugation interne comportant :
■ un centrifugeur apte à tourner autour d'un axe X, notamment vertical et dont la bande périphérique est percée d'une pluralité d'orifices,
■ un panier à fond et à paroi associé à l'intérieur du centrifugeur, la paroi étant percée d'orifices,
■ un moyen d'étirage gazeux à haute température sous forme d'un brûleur annulaire,
■ un moyen pneumatique pour canaliser/ajuster les dimensions des fibres sous forme d'une couronne de soufflage,
■ un moyen mécanique comprenant une paroi disposée autour du centrifugeur en regard de sa bande périphérique au moins,
   est **caractérisé en ce que** la hauteur de la paroi du panier est inférieure à la hauteur de la bande périphérique du centrifugeur et le fond du panier est sensiblement à la hauteur de la partie la plus basse de la bande périphérique du centrifugeur à l'aide de moyens d'abaissement ou d'écartement du panier par rapport à la partie supérieure du centrifugeur.

Ces moyens d'abaissement ou d'écartement consistent notamment en une cale associée d'une part au panier et d'autre part à la partie supérieure du centrifugeur.

Selon une autre caractéristique, la paroi est refroidie et est au moins partiellement cylindrique ou sous forme d'un tronc de cône évasé de préférence en partie supérieure.

De préférence dans ce dispositif, la température du brûleur est destinée à être au moins égale à 1500°C, de préférence au moins égale à 1600°C, et la pression du brûleur est destinée à être au moins égale à 5886 (600 mmCE), de préférence aux environs de 6377 Pa (650 mmCE).

Selon l'invention, le produit obtenu par le dispositif décrit ci-dessus est **caractérisé en ce qu**'il ne contient pas de particules dévitrifiées et/ou infibrées, la longueur des fibres est au plus égale à 2 cm, de préférence inférieure à 1,5 cm, et les fibres présentent un micronaire inférieur ou égal à 4 sous 5 grammes, notamment compris entre 2,5 et 4 sous 5 grammes, ou un micronaire inférieur ou égal à 18 I/mn, notamment compris entre 11 et 15 I/mn, en particulier de l'ordre de 12 à 13 I/mn.

On définit dans le cadre de l'invention, la longueur des fibres par la mesure de la longueur d'une touffe de fibres, prélevée notamment avec une pince et pesant entre 0,5 et 1 gramme, dans un échantillon de produit dépourvu de liant, c'est-à-dire soit un produit prélevé directement sous le centrifugeur, soit un produit désensimé.

On définit dans le cadre de l'invention un produit "qui ne contient pas de particules dévitrifiées et/ou infibrées" par un produit présentant moins de 1% de particules en poids et dont le diamètre apparent de la particule est supérieur à 40µm ( par exemple des particules en forme de gouttelettes ).

Ainsi, le produit obtenu avec le dispositif ou par le procédé de l'invention a l'avantage de conduire, par ses fibres plus courtes, à de bonnes propriétés de résistance à l'arrachement et à la compression, par un faible micronaire des fibres, à une conductivité thermique plus intéressante (plus faible) que celle de produit de type LITOBAC et à un toucher du produit bien plus agréable, plus doux que celui de produit de type LITOBAC.

A titre indicatif, on peut noter une relation de correspondance entre les valeurs micronaire ainsi obtenue dans le cadre de l'invention et la valeur du diamètre moyen de l'échantillon de fibres. Globalement, une valeur micronaire d'environ 12 I/mn correspond à un diamètre moyen de 2,5 à 3 µm, une valeur de 13,5 I/mn correspond sensiblement à un diamètre moyen de 3 à 3,5 µm, et enfin 18 I/mn à environ 4 à 5 µm.

Selon une caractéristique, le produit présente une densité au moins égale à 40 kg/m³, notamment comprise entre 60 et 200 kg/m³, voire égale ou supérieure à 80 kg/m³, en particulier inférieure à 120 kg/m³.

Selon une autre caractéristique, il est obtenu à partir d'une centrifugation interne par écoulement de verre fondu dans un panier pourvu d'orifices depuis lesquels sont expulsés des filets primaires vers la bande périphérique d'un centrifugeur qui comporte également des orifices d'où sont expulsés des filaments, le fond du panier étant sensiblement à hauteur de la partie la plus basse du centrifugeur.

Les filaments expulsés du centrifugeur sont étirés par des gaz à haute température émis depuis la sortie d'un brûleur à une température d'au moins 1500°C, de préférence d'au moins 1600°C, notamment compris entre 1500 et 1650 °C.

Avantageusement, le produit est obtenu à partir d'un étirage de filaments, expulsés depuis un centrifugeur, sous un courant gazeux à haute température qui est émis depuis la sortie d'un brûleur dont la pression est plutôt au moins égale à 5886 (600 mmCE), de préférence aux environs de 6377 Pa (650 mmCE).

Le produit obtenu par ce mode de réalisation ci-dessus est selon une autre caractéristique issu des filaments expulsés depuis le centrifugeur qui sont canalisés à l'aide d'un moyen pneumatique, du type jets de gaz, de façon à produire des fibres qui à leur tour son encore canalisées et ajustées en longueur à l'aide d'un moyen mécanique, du type paroi, contre lequel les fibres viennent se heurter.

Selon une autre caractéristique, le produit est obtenu à partir de compositions verrières décrites dans les demandes de brevet EP 0 399 320 et EP 0 412 878, ou encore dans la demande de brevet WO 00/17117.

Ainsi, on peut citer les compositions verrières suivantes.
En proportions pondérales :

| | |
|---|---|
| SiO₂ | 57 à 70% |
| Al₂O₃ | 0 à 5% |
| CaO | 5 à 10% |
| MgO | 0 à 5% |
| Na₂O + K₂O | 13 à 18% |
| B₂O₃ | 2 à 12% |
| F | 0 à 1,5% |
| P₂O₅ | 0 à 4% |
| Impuretés | <2% |

et renferme plus de 0,1% en poids de pentoxyde de phosphore lorsque le pourcentage pondéral d'alumine est égal ou supérieur à 1 %.
Ou comme autre composition, en mol% :

| | |
|---|---|
| SiO₂ | 55-70 |
| B₂O₃ | 0-5 |
| Al₂O₃ | 0-3 |
| TiO₂ | 0-6 |
| Oxydes de fer | 0-2 |
| MgO | 0-5 |
| CaO | 8-24 |
| Na₂O | 10-20 |
| K₂O | 0-5 |
| Fluorure | 0-2 |

Ou encore, la composition verrière suivante en proportions pondérales, la teneur en alumine étant de préférence supérieure ou égale à 16% en poids,

| | |
|---|---|
| SiO₂ | 35-60 % |
| Al₂O₃ | 12-27 % |
| CaO | 0-35 % |
| MgO | 0-30 %, |
| Na₂O | 0-17 % |
| K₂O | 0-17 % |
| R₂O (Na₂O + K₂O) | 10-17%, |
| P₂O₅ | 0-5 % |
| Fe₂O₃ | 0-20 % |
| B₂O₃ | 0-8% |
| TiO₂ | 0-3% |

Avantageusement, il est utilisé pour fabriquer des panneaux de toit de densité comprise entre 80 et 150 kg/m³, de taux de liant de l'ordre de 10%, présentant une résistance à l'arrachement après vieillissement d'au moins 20 kPa et une résistance à la compression d'environ 70 kPa pour une épaisseur d'environ 50 mm ou d'au moins 55 kPa pour une épaisseur d'environ 80 mm, ainsi qu'une conductivité thermique d'au plus 35 mW/m.K.

L'invention concerne également un procédé de formation de fibres minérales pour obtenir un produit d'isolation thermique et/ou acoustique. Ce procédé qui comprend un dispositif de formation de fibres tel que décrit ci-dessus, et un crêpage, est **caractérisé en ce que** les filaments expulsés depuis le centrifugeur sont obtenus à partir d'un centrifugeur dont le fond du panier a été abaissé de façon à être sensiblement à hauteur de la partie la plus basse du centrifugeur.

Avantageusement, on peut également prévoir d'augmenter le nombre d'orifices du centrifugeur par unité de surface par rapport au nombre d'orifices d'un centrifugeur existant.

D'autres avantages et caractéristiques de l'invention vont à présent être décrits plus en détail en regard des dessins annexés sur lesquels :
- Les figures 1 et 3 sont des photographies de vues partielles d'un produit obtenu avec le dispositif ou par le procédé de l'invention;
- Les figures 2 et 4 sont des photographies de vues partielles d'un produit de l'art antérieur;
- La figure 5 est une photographie d'un produit obtenu avec le dispositif ou par le procédé de l'invention et d'un produit de l'art antérieur arrachés selon une même direction;

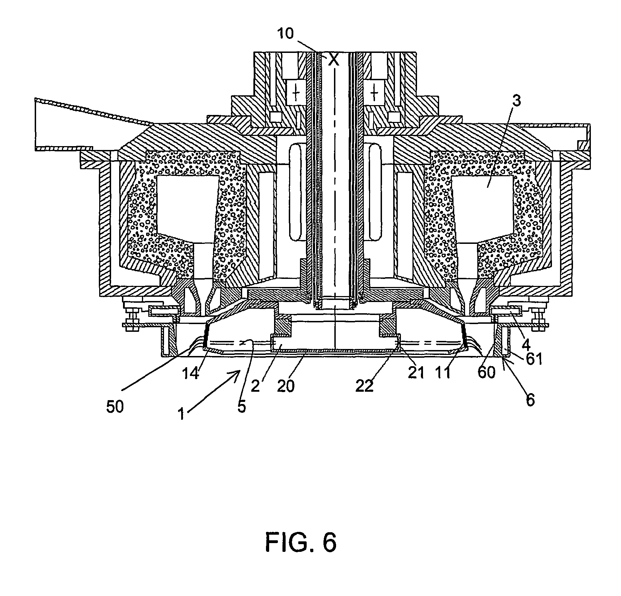

- La figure 6 une vue schématique en coupe verticale du dispositif de fibrage selon invention;
- La figure 7 est une vue agrandie et partielle de la figure 6.

Il s'agit par les photographies 1 et 2 de montrer la différence de longueur des fibres entre le produit obtenu avec le dispositif ou par le procédé de l'invention et celui usuel de l'art antérieur.

Les fibres ont été prélevées sur des produits en laine minérale, ici en laine de verre, qui sont obtenus par centrifugation interne et étirage par un courant gazeux à haute température, et par crêpage à partir d'installations de fibrage et de crêpage que nous décrirons plus loin.

Les produits testés sont des échantillons de 20 cm par 20 cm et d'épaisseur 50 mm découpés à partir de feutres de plus grandes dimensions, Les dimensions des échantillons sont fournies à titre d'exemple pour les présents tests, mais peuvent bien entendues être différentes sans que l'étape de désensimage que nous décrivons ci-après et précédant le prélèvement des fibres soit changée.

Ces produits présentent une densité au moins égale à 40 kg/m³, ici de 100 kg/m³, et un micronaire de 3,5 sous 5 grammes.

L'étape de désensimage précédant le prélèvement des fibres à partir des échantillons de produits fabriqués de l'art antérieur et de l'invention consiste à les mettre dans un four durant trois heures selon plusieurs cycles de chauffage qui sont les suivants:
■ enfournement des échantillons à une température de 250°C,
■ premier cycle de chauffage à 250°C durant une heure,
■ deuxième cycle de chauffage durant une heure en augmentant la température de 250 °C à 350 °C,
■ troisième cycle de chauffage durant une heure en augmentant la température de 350 °C à 450 °C,
■ refroidissement à l'air ambiant pendant une demi-heure.

Le prélèvement se fait ensuite à l'aide d'une pince de type à épiler en arrachant une touffe de fibres. Puis, la touffe de fibres est disposée en regard d'une règle ou' d'un ruban gradué pour être mesurée.

On note ainsi, tel que visible sur les photographies, que la longueur des fibres de l'invention est courte, au plus égale à 2 cm, et de 1,5 cm pour la fibre présentée ici, alors que la longueur des fibres de l'art antérieur est de 3 à 4 cm voire même de près de 10 cm, soit sensiblement le double de longueur.

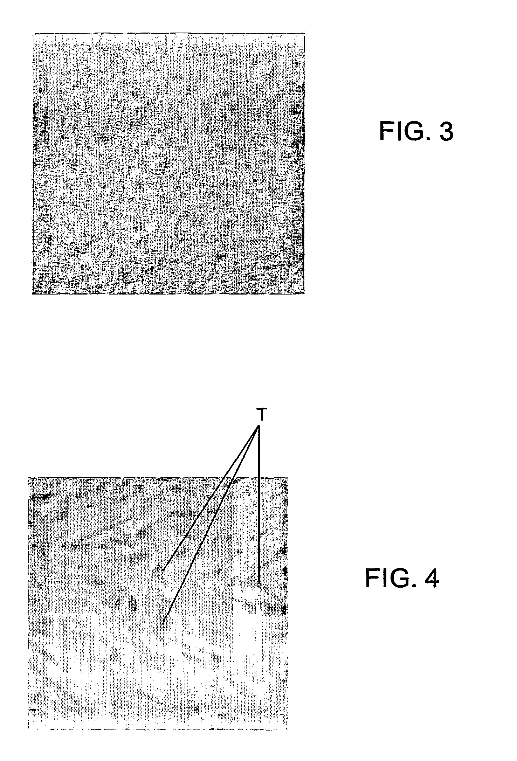

Outre la différence sur la longueur des fibres, on constate sur le produit obtenu avec le dispositif ou par le procédé de l'invention illustré sur la figure 3 (photographie correspondant à 5 cm de l'échantillon) une répartition multidirectionnelle des fibres très homogène et sans "trou", contrairement au produit de l'art antérieur illustré sur la figure 4 (photographie correspondant à 5 cm x 5 cm de l'échantillon) pour lequel des agglomérats de fibres collées entre elles ont tendance à se former ce qui engendre des trous repérés par la référence T sur la figure.

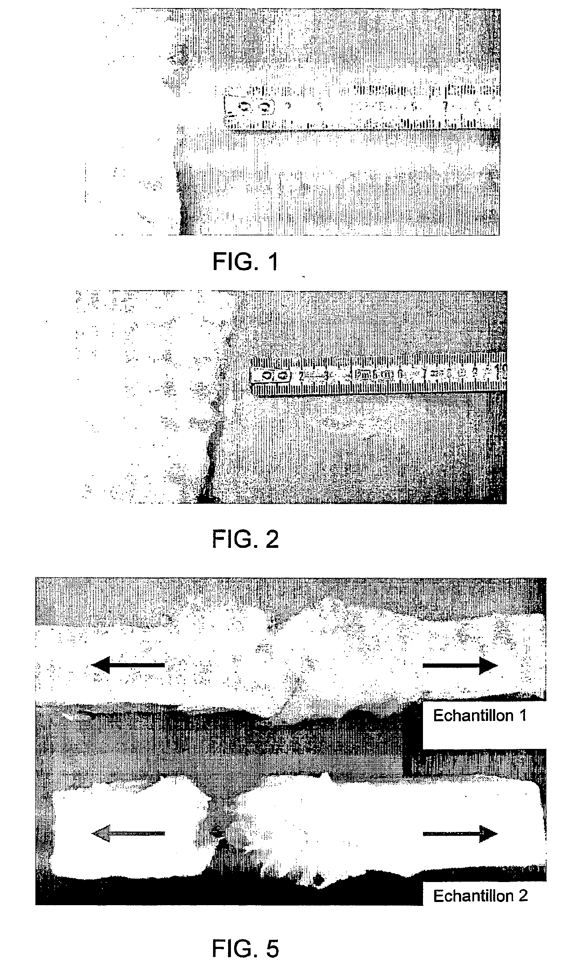

Il est ainsi mis en évidence pour le produit obtenu avec le dispositif ou par le procédé de l'invention, une structure plus compacte, conduisant à un produit isotrope, ce qui lui assure par conséquent une désolidarisation des fibres au test à l'arrachement bien moins marqué que pour un produit de l'art antérieur (figure 5). On voit en effet sur la figure 5 que lorsque les échantillons sont arrachés suivant le sens des flèches, le produit de l'art antérieur (échantillon 1) présente des fibres qui ne sont plus « soudées », solidarisées entre elles, contrairement à l'échantillon de l'invention (échantillon 2).

Il est surprenant de noter que le produit obtenu avec le dispositif ou par le procédé de l'invention présente de meilleures propriétés mécaniques que l'échantillon selon l'art antérieur. En effet on pourrait penser à première vue qu'un échantillon où les fibres sont longues et enchevêtrées résiste davantage à un effort mécanique qu'un échantillon à fibres courtes. En fait, les chiffres de résistance à l'arrachement et à la compression sont meilleurs pour le produit obtenu avec le dispositif ou par le procédé de l'invention comme nous le verrons ultérieurement dans un tableau récapitulatif. On peut attribuer cet effet à une structure plus compacte qu'autorisent des fibres plus courtes.

Les essais suivants ont été effectués sur des échantillons selon l'invention et selon l'art antérieur :
Le test à l'arrachement est conforme à la norme EN 1607. Un échantillon de forme annulaire est pris en sandwich entre deux cylindres dont un est fixe et l'autre est déplacé en translation suivant une vitesse de l'ordre de 300 mm/min de manière à tirer sur l'échantillon. Un capteur de force mesure la force pour laquelle la rupture de l'échantillon a lieu. On réalise généralement deux tests à l'arrachement, un premier sur le produit obtenu en sortie de fabrication, et un second sur un produit vieilli qui est obtenu à partir d'un produit passé en autoclave à une température de 107°C pendant 45 minutes avec un taux d'humidité de 100% (résistance après autoclave).
Le test à la compression est conforme à la norme EN 826. Il consiste à appliquer une force de compression sur les faces d'un échantillon carré. Un capteur de force mesure la force pour laquelle la compression de l'échantillon correspond à une déformation de 10% de son épaisseur initiale.

Le produit est obtenu à partir d'un procédé principal et d'un dispositif de fibrage proches de ceux de l'art antérieur, auxquels des modifications ont été apportées. Ces modifications se révèlent importantes pour obtenir des produits de bonne qualité.

De manière commune à l'art antérieur, le dispositif de fibrage comporte un centrifugeur de type sans fond 1, un panier à fond plein 2 agencé à l'intérieur du centrifugeur, un brûleur annulaire 3 et une couronne de soufflage 4 qui entourent le centrifugeur.

Le centrifugeur sans fond 1 est fixé à un moyeu en prise sur un arbre creux 10 de rotation selon un axe X monté vertical, l'arbre étant entraîné par un moteur non représenté.

Le centrifugeur 1 comporte une bande périphérique 11 qui est percée d'un grand nombre d'orifices 12. Les orifices, de diamètre compris entre 9/10 et 6/10 mm, sont formés selon des rangées qui sont réparties en trois groupes de haut en bas : les rangées intermédiaires ont un diamètre de trou inférieur aux rangées haute et basse d'au moins 0,1 ou 0,2 mm.

Le panier 2 à fond plein 20 est associé au centrifugeur en étant agencé à l'intérieur du centrifugeur de façon que son ouverture soit disposée en regard de l'extrémité libre de l'arbre creux 10 et que sa paroi 21 soit sensiblement éloignée de la bande périphérique 11.

La paroi cylindrique 21 du panier est percée d'un petit nombre d'orifices 22 relativement gros, par exemple d'un diamètre de l'ordre de 3 mm.

Un filet de verre fondu alimente le centrifugeur en passant par l'arbre creux 10 et s'écoule dans le panier 2. Le verre fondu, par passage au travers des orifices 22 du panier, est alors distribué sous forme de filets primaires 5 et dirigés vers l'intérieur de la bande périphérique 11 d'où ils sont expulsés au travers des orifices 12 sous l'effet de la force centrifuge sous forme de filaments 50.

Les compositions de verre utilisées pour les produits obtenus avec le dispositif ou par le procédé de l'invention peuvent être diverses. Des exemples de compositions sont décrites dans les demandes de brevet EP 0 399 320 et EP 0 412 878.

A titre d'exemple, une composition est la suivante pour laquelle les éléments sont exprimés en pourcentage massique.

| | |
|---|---|
| SiO₂ | 65,3 |
| Al₂O₃ | 2,1 |
| Na₂O | 16,4 |
| CaO | 8,1 |
| MgO | 2,4 |
| K₂O | 0,7 |
| B₂O₃ | 4,5 |

On peut également citer un autre exemple de composition verrière tiré de la demande de brevet WO 00/17117 qui présente l'avantage d'une tenue en température améliorée. Les éléments sont exprimés en pourcentage massique.

| | |
|---|---|
| SiO₂ | 42,3 |
| Al₂O₃ | 23,2 |
| Fe₂O₃ | 4,9 |
| CaO | 15 |
| MgO | 0,6 |
| Na₂O | 6,1 |
| K₂O | 5,1 |
| P₂O₅ | 0,1 |

Le brûleur annulaire 3 est conforme à l'enseignement du brevet EP 0 189 354. Il engendre un jet gazeux dont la température aux lèvres du brûleur est comprise entre 1500 et 1650°C, de préférence égale à 1550°C.

La couronne de soufflage 4 qui constitue le moyen pneumatique connu pour participer à la canalisation des fibres comporte des éléments générateurs de jets de gaz, de préférence individualisés et divergents se rejoignant en dessous de la rangée d'orifices la plus basse de la bande périphérique 11. Deux modes de réalisation sont préférés : un anneau tubulaire percé d'orifices sur lesquels sont fixés des tétons ou une série de buses.

Cette barrière pneumatique ainsi formée vient freiner les fibres, infléchir éventuellement la direction de leur mouvement. En outre, en heurtant la nappe de gaz froid, les fibres se brisent par le choc suffisamment fort engendré.

Contrairement à l'art antérieur, le dispositif de l'invention ne comporte pas d'inducteur annulaire pour le chauffage de la bande périphérique 11.

Selon l'invention, le dispositif comporte un moyen mécanique servant à briser les fibres qui se présente sous la forme d'un dispositif annulaire 6 pourvu d'une paroi extérieure 60 en acier inoxydable, tournée vers le centrifugeur 1 et sous la forme d'un tronc de cône évasé vers le haut. Ce dispositif 6 est conforme à l'enseignement du document WO 01/38245. Avantageusement, il comprend une cavité interne 61 constituant un système de refroidissement par circulation d'eau pour assurer que la paroi 60 avec laquelle les fibres vont entrer en contact reste à une température suffisamment faible pour qu'elle n'y restent pas collées, mais "rebondissent" et se brisent éventuellement sous l'impact.

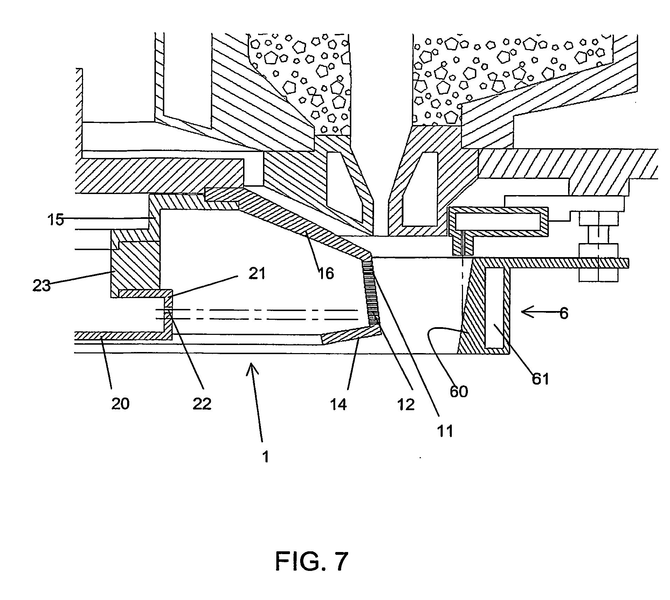

Selon l'invention, une autre modification vis-à-vis de l'art antérieur consiste en l'abaissement du fond 20 du panier 2 par rapport à l'extrémité libre de l'arbre creux 10 de façon que le fond 20 soit sensiblement à la hauteur de la partie 14 la plus basse de la bande périphérique 11 du centrifugeur, dénommée encore bas de bande (figure 7).

Cet abaissement ou écartement supplémentaire par rapport à la partie supérieure 16 du centrifugeur est réalisé par exemple au moyen d'une cale 23 fixée mécaniquement, par vissage par exemple, d'une part au panier 2 et d'autre part à la pièce de suspension habituelle 15 rendue solidaire du centrifugeur 1. La cale assure un écartement supplémentaire avec l'extrémité libre de l'arbre et donc avec la partie supérieure 16 du centrifugeur.

Cette configuration permet au verre fondu issu des orifices 22 du panier de se disperser en bas de bande 14 du centrifugeur, maintenant ainsi cette partie à une température suffisante pour ne pas boucher les orifices inférieurs 12, le verre atteignant quand même les orifices supérieurs par la force centrifuge. Ainsi les fibres projetées à l'extérieur du centrifugeur sont essentiellement dépourvues de grains, ou particules dévitrifiées.

Enfin, en sortie du dispositif de l'invention, après avoir heurtées la paroi 60, les fibres, de manière conventionnelle se déposent en couches sur un tapis après pulvérisation de liant sous le centrifugeur (non illustré). Ne sont pas représentés non plus, car communs à l'art antérieur, le traitement thermique pour réticuler le liant notamment, et le crêpage de la nappe selon l'enseignement du brevet EP- 133 083.

Le produit résultant de l'étirage selon le dispositif de l'invention et du crêpage permet d'obtenir une finesse de fibres correspondant à un micronaire inférieur ou égale à 4 sous 5 grammes, notamment compris entre 2,5 et 4 sous 5 grammes; en particulier, un micronaire de 3/5 g correspond à un diamètre moyen compris entre 4 et 6 µm. Le produit obtenu avec le dispositif ou par le procédé de l'invention présente ainsi l'avantage de comporter des fibres fines, comme il peut exister dans le produit usuel de l'art antérieur tel que l'échantillon 1, mais reste meilleur en finesse que le produit conforme à celui de la demande WO 01/38245 pour lequel le micronaire atteint 6,8 sous 5 grammes. Cette finesse assure un toucher bien plus doux et un gain sur la conductivité thermique de 0,5 à 1 mW/m.K.

Le tableau I ci-dessous résume et permet une comparaison des caractéristiques d'un produit usuel selon l'art antérieur, d'un produit conforme à la demande WO 01/38245 dit LITOBAC, et d'un produit obtenu avec le dispositif ou par le procédé de l'invention, ces trois produits présentant une densité de 100 kg/m³ et un taux de liant massique par rapport à la laine de verre d'environ 10 %. Il s'agit en particulier de panneaux d'isolation pour des toitures-terrasses accessibles à la circulation d'une épaisseur de 50 mm.

**TABLEAU I**

| | micronaire | Conductivité thermique en mW/m.K. | Résistance à l'arrachement avant autoclave en kPa | Résistance à l'arrachement après autoclave en kPa | Résistance a à la compression en kPa |
|---|---|---|---|---|---|
| Produit usuel | 3,5/5g | 35 | 20 | 15 | 50 |
| Produit LITOBAC | 6,8/5g | 36,5 | 30 | 20 | 70 |
| Produit obtenu avec le dispositif ou par le procédé de l'invention | 3,5/5g | 35 | 30 | 20 | 70 |

Le produit obtenu avec le dispositif ou par le procédé de l'invention cité à titre d'exemple dans le tableau I ci-dessus est donc issu d'un dispositif présentant comme particularités par rapport à l'art antérieur, de comporter une paroi refroidie contre laquelle viennent rebondir les fibres et se briser, ainsi qu'un abaissement du fond du panier à une hauteur sensiblement équivalente à celle de la partie la plus basse de la bande périphérique du centrifugeur.

## Revendications

1. Dispositif de formation de fibres minérales par centrifugation interne comportant :
■ un centrifugeur (1) apte à tourner autour d'un axe X, notamment vertical et dont la bande périphérique (11) est percée d'une pluralité d'orifices (12),
■ un panier (2) à fond (20) et à paroi (21) associé à l'intérieur du centrifugeur (1), la paroi (21) étant percée d'orifices (22)
■ un moyen d'étirage gazeux à haute température sous forme d'un brûleur annulaire (3),
■ un moyen pneumatique pour canaliser/ajuster les dimensions des fibres sous forme d'une couronne de soufflage (4),
■ un moyen mécanique (6) comprenant une paroi (60) disposée autour du centrifugeur (1) en regard de sa bande périphérique (11) au moins,
**caractérisé en ce que** la hauteur de la paroi (21) est inférieure à la hauteur de la bande périphérique (11) du centrifugeur et le fond (20) du panier (2) est sensiblement à la hauteur de la partie (14) la plus basse de la bande périphérique (11) du centrifugeur à l'aide de moyens d'abaissement ou d'écartement (23) du panier par rapport à la partie supérieure (16) du centrifugeur.

2. Dispositif selon la revendication 1, **caractérisé en ce que** les moyens d'abaissement ou d'écartement (23) consistent en une cale associée d'une part au panier (2) et d'autre part à la partie supérieure (16) du centrifugeur.

3. Dispositif selon la revendication 1 ou 2 **caractérisé en ce que** la paroi (60) est destinée à être refroidie et est au moins partiellement cylindrique ou sous forme d'un tronc de cône évasé de préférence en partie supérieure.

4. Dispositif selon l'une des revendications 1 à 3, **caractérisé en ce que** la température du brûleur (3) est destinée à être d'au moins 1500 °C, de préférence d'au moins 1600°C.

5. Dispositif selon l'une des revendications 1 à 4, **caractérisé en ce que** la pression du brûleur (3) est au moins égale à 5886 Pa (600 mmCE), de préférence aux environs de 6377 Pa (650 mmCE).

6. Procédé de formation d'un produit à base de fibres minérales, par centrifugation interne au moyen d'un centrifugeur (1) dans lequel s'écoule du verre fondu et depuis lequel sont expulsés des filaments (50), par étirage gazeux à haute température au moyen d'un courant gazeux d'étirage émis par un brûleur (3) et au travers duquel les filaments se transforment en fibres, et par crêpage, **caractérisé par** le dispositif selon l'une quelconque des revendications 1 à 5.

7. Procédé selon la revendication 6, **caractérisé en ce que** l'on régule la température du brûleur et/ou sa pression en fonction de la température du verre fondu.

8. Procédé selon la revendication 7, **caractérisé en ce que** la température du brûleur est d'au moins 1500°C, de préférence d'au moins 1600°C.

9. Procédé selon la revendication 7 ou 8, **caractérisé en ce que** la pression du brûleur est d'au moins 5886 Pa (600 mmCE), de préférence aux environs de 6377 Pa (650 mmCE)_{.}

10. Procédé selon l'une des revendications 6 à 9, **caractérisé en ce que** les fibres sont canalisées à l'aide d'un moyen pneumatique (4), du type jets de gaz, et ajustées en longueur à l'aide d'un moyen mécanique (6), du type paroi, contre lequel les fibres viennent se heurter.

11. Utilisation du dispositif selon l'une des revendications 1 à 5 en combinaison avec le procédé selon l'une des revendications 6 à 10 pour former un produit d'isolation thermique et/ou phonique à base de fibres minérales, le produit ne contenant pas de particules dévitrifiées et/ou infibrées, la longueur des fibres étant au plus égale à 2 cm, de préférence inférieure à 1,5 cm, et les fibres présentant un micronaire inférieur ou égal à 4 sous 5 grammes, notamment compris entre 2,5 et 4 sous 5 grammes, ou un micronaire inférieur ou égal à 18 I/mn, notamment compris entre 11 et 15 I/mn, en particulier de l'ordre de 12 à 13 I/mn.

12. Utilisation selon la revendication 11, **caractérisé en ce qu'**il présente une densité au moins égale à 40 kg/m³, notamment comprise entre 60 et 200 kg/m³ , voire égale ou supérieure à 80 kglm³, en particulier inférieure à 120 kg/m³_{.}

13. Utilisation selon la revendication 11 ou 12, **caractérisé en ce qu'**il est utilisé pour fabriquer des panneaux de toit de densité comprise entre 80 et 150 kg/m³, de taux de liant de l'ordre de 10%, présentant une résistance à l'arrachement après vieillissement d'au moins 20 kPa et une résistance à la compression d'environ 70 kPa pour une épaisseur d'environ 50 mm ou d'au moins 55 kPa pour une épaisseur d'environ 80 mm, ainsi qu'une conductivité thermique d'au plus 35 mW/m.K.

## Claims

1. A device for forming mineral fibers by internal centrifugation, comprising:
■ a spinner (1) capable of rotating about an axis X, especially a vertical axis, and the peripheral band (11) of which is drilled with a number of holes (12);
■ a basket (2) with associated bottom (20) and a wall (21) inside the spinner (1), the wall (21) being drilled by holes (22);
■ a high-temperature gas attenuation means in the form of an annular burner (3);
■ a pneumatic means for channeling/adjusting the dimensions of the fibers, in the form of a blowing ring (4);
■ a mechanical means (6) comprising a wall (60) placed around the spinner (1), opposite at least its peripheral band (11),
**characterized in that** the height of the wall (21) is inferior to the height of the peripheral band (11) of the spinner and the bottom (20) of the basket (2) is substantially at the height of the lowest part (14) of the peripheral band (11) of the spinner using means (23) for lowering the basket or distancing it from the upper part (16) of the spinner.

2. The device as claimed in claim 1, **characterized in that** the lowering or distancing means (23) consist of a chock associated on the one hand, with the basket (2) and, on the other hand, with the upper part (16) of the spinner.

3. The device as claimed in claim 1 or 2, **characterized in that** the wall (60) is intended to be cooled and is at least partly cylindrical or in the form of a truncated cone preferably flared out at the top.

4. The device as claimed in one of claims 1 to 3, **characterized in that** the temperature of the burner (3) is intended to be at least 1500°C, preferably at least 1600°C.

5. The device as claimed in one of claims 1 to 4, **characterized in that** the pressure of the burner (3) is at least equal to 5886 Pa (600 mm of WC), preferably about 6377 Pa (650 mm of WC).

6. A process for forming a product based on mineral fibers, by internal centrifugation by means of a spinner (1) in which molten glass flows and from which filaments (50) are expelled, by high-temperature gas attenuation by means of an attenuating gas stream emitted by a burner (3) and through which the filaments are converted into fibers, and by crimping, **characterized by** the device as claimed in claims 1 to 5.

7. The process as claimed in claim 6, **characterized in that** the temperature of the burner and/or its pressure are/is adjusted according to the temperature of the molten glass.

8. The process as claimed in claim 7, **characterized in that** the temperature of the burner is at least 1500°C, preferably at least 1600°C.

9. The process as claimed in claim 7 or 8, **characterized in that** the pressure of the burner is at least 5886 Pa (600 mm of WC), preferably about 6377 Pa (650 mm of WC).

10. The process as claimed in one of claims 6 to 9, **characterized in that** the fibers are channeled using a pneumatic means (4), of the gas jet type, and are adjusted lengthwise using a mechanical means (6), of the wall type, which are struck by the fibers.

11. An use of the device as claimed in one of claims 1 to 5 in combination with the process as claimed in one of claims 6 to 10 to form a thermal and/or acoustic insulation product based on mineral fibers, obtained by internal centrifugation and attenuation by a high-temperature gas stream and by crimping, **characterized in that** it contains no devitrified and/or defiberized particles, the length of the fibers is at most equal to 2 cm, preferably less than 1.5 cm, and the fibers have a micronaire per 5 grams of less than or equal to 4, especially between 2.5 and 4, or a micronaire of less than or equal to 18 I/min, especially between 11 and 15 I/min, in particular around 12 to 13 I/min.

12. The use as claimed in claim 11, **characterized in that** it has a density at least equal to 40 kg/m³, especially between 60 and 200 kg/m³, or even equal to or greater than 80 kg/m³, in particular less than 120 kg/m³.

13. The use as claimed in claim 11 or 12, **characterized in that** it is used to manufacture roof panels with a density of between 80 and 150 kg/m³, a binder content of around 10% and having a tear strength after ageing of at least 20 kPa and a compressive strength of about 70 kPa for a thickness of about 50 mm or at least 55 kPa for a thickness of about 80 mm, and also a thermal conductivity of at most 35 mW/m.K.

## Patentansprüche

1. Vorrichtung zum Bilden von Mineralfasern durch innere Zentrifugation, umfassend:
■ eine Zentrifuge (1), die geeignet ist sich um eine Achse X zu drehen, insbesondere vertikal, und deren Umfangsband (11) mit einer Vielzahl von Öffnungen (12) durchbohrt ist,
■ einen Korb (2) am Boden (20) und an der Wand (21), der mit dem Inneren der Zentrifuge (1) verbunden ist, wobei die Innenwand (21) mit Öffnungen (22) durchbohrt ist,
■ ein Mittel zum Ziehen mit Gas bei hoher Temperatur in Form eines ringförmigen Brenners (3),
■ ein pneumatisches Mittel zum Kanalisieren/Anpassen der Abmessungen der Fasern in Form eines Blaskranzes (4),
■ ein mechanisches Mittel (6), das eine Wand (60) umfasst, die um die Zentrifuge (1) wenigstens hinsichtlich deren Umfangsband (11) herum angeordnet ist,
**dadurch gekennzeichnet, dass** die Höhe der Wand (21) niedriger als die Höhe des Umfangsbandes (11) der Zentrifuge ist und der Boden (20) des Korbes (2) mithilfe von Mitteln zum Absenken oder Beabstanden (23) des Korbes im Vergleich zu dem oberen Teil (16) der Zentrifuge etwa der Höhe des untersten Teils (14) des Umfangsbands (11) der Zentrifuge entspricht.

2. Vorrichtung nach Anspruch 1, **dadurch gekennzeichnet, dass** die Mittel zum Absenken oder Beabstanden (23) aus einem Keil bestehen, der mit einem Teil des Korbes (2) und auf der anderen Seite mit dem oberen Teil (16) der Zentrifuge verbunden ist.

3. Vorrichtung nach Anspruch 1 oder 2, **dadurch gekennzeichnet, dass** die Wand (60) abgekühlt werden kann und wenigstens teilweise zylinderförmig ist oder in Form eines Kegelstumpfes vorzugsweise in dem oberen Teil weiter wird.

4. Vorrichtung nach Anspruch 1 bis 3, **dadurch gekennzeichnet, dass** die Temperatur des Brenners (3) wenigstens 1500 °C beträgt, bevorzugt wenigstens 1600 °C.

5. Vorrichtung nach Anspruch 1 bis 4, **dadurch gekennzeichnet, dass** der Druck des Brenners (3) wenigstens gleich 5886 Pa (600 mmCE) beträgt, vorzugsweise etwa 6377 Pa (650 mmCE).

6. Verfahren zum Herstellen eines Produkts auf Basis von Mineralfasern durch inne Zentrifugation mittels einer Zentrifuge (1), in der geschmolzenes Glas fließt und aus der durch Ziehen mit Gas bei hoher Temperatur mittels eines Gasstroms zum Ziehen, der von einem Brenner (3) abgegeben wird, Filamente (50) ausgestoßen werden und mittels derer und durch Kräuseln sich die Filamente zu Fasern umwandeln, **gekennzeichnet durch** die Vorrichtung nach einem der Ansprüche 1 bis 5.

7. Verfahren zum Herstellen nach Anspruch 6, **dadurch gekennzeichnet, dass** die Temperatur des Brenners und/oder dessen Druck entsprechend der Temperatur des geschmolzenen Glases reguliert wird.

8. Verfahren zum Herstellen nach Anspruch 7, **dadurch gekennzeichnet, dass** die Temperatur des Brenners wenigstens 1500 °C beträgt, bevorzugt wenigstens 1600 °C.

9. Verfahren zum Herstellen nach Anspruch 7 oder 8, **dadurch gekennzeichnet, dass** der Druck des Brenners wenigstens gleich 5886 Pa (600 mmCE) beträgt, vorzugsweise etwa 6377 Pa (650 mmCE).

10. Verfahren zum Herstellen nach einem der Ansprüche 6 bis 9, **dadurch gekennzeichnet, dass** die Fasern mit Hilfe eines pneumatischen Mittels (4) vom Typ eines Gasstrahls kanalisiert werden und in der Länge mit Hilfe eines mechanischen Mittels (6) vom Typ einer Wand, gegen die die Fasern aufprallen, angepasst werden.

11. Verwendung einer Vorrichtung nach einem der Ansprüche 1 bis 5 in Kombination mit einem Verfahren nach einem der Ansprüche 6 bis 10 zum Bilden eines Produkts für die Wärme- und/oder Schalldämmung auf Basis von Mineralfasern, wobei das Produkt keine nicht verglasten und/oder zerfaserten Partikel enthält, die Länge der Fasern höchstens gleich 2 cm beträgt, bevorzugt weniger als 1,5 cm, und die Fasern einen Micronaire-Wert geringer oder gleich 4 in 5 Gramm aufweisen, bevorzugt zwischen 2,4 und 4 in 5 Gramm, oder einen Micronaire-Wert geringer oder gleich 18 1/mn, bevorzugt zwischen 11 und 15 1/mn, stärker bevorzugt in der Größenordnung von 12 bis 13 1/mn.

12. Verwendung nach Anspruch 11, **dadurch gekennzeichnet, dass** es eine Dichte von wenigstens gleich 40 kg/m³ aufweist, bevorzugt zwischen 60 und 200 kg/m³, sogar gleich oder höher als 80 kg/m³, stärker bevorzugt unter 120 kg/m³.

13. Verwendung nach Anspruch 11 oder 12, **dadurch gekennzeichnet, dass** es zum Herstellen von Dachplatten mit einer Dichte zwischen 80 und 150 kg/m³ und mit einem Bindemittelanteil in einer Größenordnung von 10 % verwendet wird, dass es eine Abrißfestigkeit nach Alterung von wenigstens 20 kPa aufweist und eine Druckfestigkeit von ungefähr 70 kPa bei einer Dicke von ungefähr 50 mm oder wenigstens 55 kPa bei einer Dicke von ungefähr 80 mm, sowie eine Wärmeleitfähigkeit von höchstens 35mW/m.K.
